# EUROPEAN PATENT APPLICATION

(11) **EP 3 367 717 A1**
(43) Date of publication of application: **29.08.2018**
(21) Application number: 17000290.1
(22) Date of filing: 22.02.2017
(51) Int. Cl.: H04W 12/08, H04W 12/12, H04L 29/06, H04W 12/04

(54) **PROFILE RIGHTS MANAGEMENT**

(71) Applicant: Giesecke+Devrient Mobile Security GmbH, 81677 München (DE)
(72) Inventor: Wimböck, Ulrich, 82327 Tutzing (DE)

(57) **Abstract**

The present invention is directed towards a method for performing profile and subscription rights management, which enables an issue of subscription profiles to grant or respectively deny access rights for instance for profile information. The present invention is furthermore directed towards a protocol triggering message exchanges, which allow the execution of the suggested method steps. The present invention is furthermore directed towards a system for performing profile and subscription rights management along with a computer program product being arranged to perform the suggested method or to operate the suggested system.

## Description

The present invention is directed towards a method for performing profile and subscription rights management, which enables an issuer of subscription profiles to grant or respectively deny access rights for instance for profile information. The present invention is furthermore directed towards a protocol triggering message exchanges, which allow the execution of the suggested method steps. The present invention is furthermore directed towards a system for performing profile and subscription rights management along with a computer program product being arranged to perform the suggested method or to operate the suggested system.

EP 3 010 263 A1 teaches a method for downloading subscriptions in a secure element each secure element cooperating with a telecommunication terminal. This reference provides technical teaching suggesting to perform encryption of data.

EP 3 016 419 A1 teaches a method of changing a profile by using an identification module the method comprising identifying a network selected by a user, determining whether the profile, which uses the network, is included in the identification module, downloading the profile corresponding to the network and furthermore enabling the profile.

EP 2 858 393 A1 teaches a method for switching a subscription manager secure routing device, comprising acquiring by a second subscription manager secure routing device from a first entity a profile installer credential amongst others.

RSP Technical Specification Version 1.1, 9 June 2016, Official Document SGP.22-RSP Technical Specification, Issued By GSM Association, teaches a eUICC architecture, interfaces used within remote SIM provisioning architecture and security functions used within the remote SIM provisioning architecture.

It is well recognized in the known art that a user who requires telecommunication services has to subscribe to a specific network for performing voice or data calls. For doing so, a profile is required, which can be evaluated by the network operator and upon a positive verification the user terminal can start a telecommunications session. The telecommunications session typically comprises transferring signalling data as well as payload data.

For identification of the user terminal, which is typically a telephone or any other portable user device, specific identification information is provided as well as data regarding offered telecommunication services by the network operator. For identification of the terminal a respective profile is typically downloaded and stored on the mobile device. The respective storage device can be formed by a SIM card or an eUICC. For identification of the terminal device and the respective eUICC a so-called eUICC identification EID is well established.

Any valid EID with a valid certificate can start profile download session and will get to a certain point in the flows defined in SGP.22 in case of a non-authorized access. At least either matching ID is verified or if there is a pending profile for the EID (in case where no matching ID is provided). Excessive download retries of unauthorized devices can have effect on profiles which are desired for a specific EID. It may block the download for the desire user (denial of service). Also it is not specified how EIDs are to be handled which seem not to have an appropriate key.

According to well-known applications scenarios there may be specific attacks regarding the availability of offered services. Several users may use their data connections to transmit several thousands of data requests to a service provider such that the service provider is no more able to serve authorized customers. This is commonly known as the so-called Denial of Service attack. Regarding the limitation of such Denial of Service attacks it is commonly known to lock users out and specifically to maintain a blacklist of unauthorized users. However, there is a disadvantage regarding the identification of potential attackers. Once a terminal is logged in and requests data, the service provider may not be able to verify whether such a terminal is in good will or performs an attack. Hence, it may also be the case that a specific user terminal is part of a Denial of Service attack but is generally authorized. In such an application scenario it may be the case that a further user terminal comprises a valid pair of keys but downloads lots of unrequired data.

A further problem arising from the known art is that for limitation of Denial of Service attacks users are either blocked from services or are allowed to obtain services. Consequently, the user behavior as such is not analyzed regarding potential attacks.

Accordingly, it is an object of the present invention to provide a method which performs user right management in the telecommunication application scenario enabling service providers to implement fine grained access right management. Furthermore, it is an object of the present invention to provide a respectively arranged protocol along with a telecommunication system for operating the suggested method and operating the suggested protocol. It is furthermore an object of the present invention to provide a computer program product comprising instructions for performing the suggested method and operating the suggested system.

The object is solved by a method for performing profile and subscription rights management according to the subject matter of independent claim 1. Further aspects are provided by dependent claims.

Accordingly, a method for performing profile and subscription rights management regarding a mobile identity module is suggested, comprising the steps of receiving at least one data request from the identity module over a wireless interface, applying a request evaluation metric on the received at least one data request considering present access rights and history data requests of the requesting identity module and implementing an access right for the at least one data request as a function of the applied request evaluation metric and updating the present access rights.

The mobile identity module can for instance be provided by a UICC or a eUICC, also referred to as embedded UICC. A UICC which is not easily accessible or replaceable and is not intended to be removed or replaced in the device and enables the secure changing of profiles. A device is any user equipment used in conjunction with an eUICC to connect to a mobile network. Accordingly, a device in which the eUICC is comprised, may be any portable device such as a cell phone, a smartphone, a tablet, a wearable, a laptop or the like. A mobile network operator refers to an entity providing access capability and communication services to its end users through a mobile network infrastructure.

Furthermore, the application scenario of the present invention is profile management, which refers to a set of functions related to downloading, installation and content update of a profile in a dedicated ISD-P on the eUICC. Download and installation are protected by profile management credentials. A ISD-P is a issuer security domain profile intended for receiving services. In case it is not otherwise specified, the present terminology shall be understood in conformance with the RSP technical specification as an official document of SGP.22 as introduced as known art.

Consequently, profile management and especially subscription rights management may refer in the present context to data being provided from a network operater, which is required for establishing a connection and registering at a network. A UICC may generally be referred to as an universal integrated circuit card, which is one of the identification modules, corresponding to a smartcard that is inserted into a mobile electronic device to provide a specific service. The UICC may include a subscriber identification module card, also referred to as SIM card. Furthermore, the UICC may store personal information on a mobile communication subscriber and may be required for authentication of the subscriber, namely the mobile end device. The subscriber may generally be a user terminal, such as a smartphone, who subscribes to a particular wireless communication service provider, which provides the wireless communication network services. The mobile identity module as currently suggested may be included in an eUICC or may be provided as an eUICC. Furthermore, the mobile identity module may be formed by a terminal device, such as a smartphone.

In general, the present invention is not limited to smartphones but rather addresses end devices in the application scenario of the so-called Internet of Things. Consequently, a mobile identity module may be comprised in any mobile end device whatsoever. It may be of advantage to provide the mobile identity module by means of a smartcard. A smartcard is a chip card being able to store and process data. The suggested subscription rights management is performed in the context of Remote Sim Provisioning system for consumer devices, wherein data requests typically address a step of obtaining profile data from a service provider.

Operator profiles are typically stored inside security domains, also referred to as security element, within the eUICC and are implemented using global platform standards. This ensures that it is impossible for any profile to access the applications or data of any profile stored on the eUICC. Consequently, the eUICC provides a secure storage for such profiles. Consequently, according to the present invention the mobile terminal sends a data request, which is received by a telecommunications service provider. Hence, the first method step of the method for performing profile and subscription rights management is performed by a network device being operated by a service provider. A mobile terminal requests data from the service provider such as a profile for being able to setup a connection in further method steps.

Receiving the at least one data request from the identity module is performed by a wireless interface meaning that a radio interface is required. This does not necessarily imply that the data request is directly received via a wireless interface but rather that a wireless connection is established between a mobile device and a device being operated by the network provider. For communication between the terminal and the network operator a specific communication session is created which does not allow to send and receive payload. Consequently, such a method step comprises transmitting signalling data.

In a further step the received at least one data request is evaluated by means of a request evaluation metric. Such a request evaluation metric may be stored on the operator side by a respective storage device. Such a request evaluation metric can likewise be distributed over a network of several devices being performed by the network operator. Consequently, applying the request evaluation metric means to evaluate the received data request and decide which access right will respond as a function of the received data request.

For applying the request evaluation metric the network operator considers present access rights and further history data requests of the requesting identity module. This provides a contribution over the art as not merely access rights are verified meaning that access is granted or not but rather further history data of previous data requests. is considered as well. Hence, in case a terminal requests data at a high frequency, this can be likewise detected and a Denial of Service attack can be identified. Furthermore, the operator can check whether specific data has already been downloaded and consequently that a further download of such data is useless and may be part of an attack. The history data requests indicate every data item being downloaded in the context of the profile and subscription rights management. Accordingly, the operator can also identify information items being previously downloaded and check whether the requesting identity module indeed requires further data.

By comparing the present data request and previous requests redundant downloads can be identified and the operator is able to detect an attack. Accordingly, in case an already authorized end device is captured, the respective behavior is analyzed and accordingly access can be restricted even though the end device in general has access rights. In a first iteration, the access rights may be set according to known techniques and furthermore the history data storage is empty. Consequently, in a first iteration it may be the case that no history data requests are to be considered. It may also be the case that the network operator provides default data for provision of history data requests. Such data may indicate that no data requests have been sent and accordingly in case the method is performed for the first time every evaluation of the history data requests may be positive meaning that there is no restriction to further access.

Implementing an access right means to establish an access right resulting from the evaluation of the request evaluation metric as defined in the previous method step. Accordingly implementing an access right may also be referred to as applying an access right or establishing an access right. This means that the consequences as resulting from the application of the request evaluation metric are implemented. It may further be optionally required to update the present access rights. In case the application of the request evaluation metric is negative, the present access rights may be set to negative meaning that no further access is allowed. In case no further access rights are permitted, the mobile identity module is locked and will not be served anymore.

Summarizing the above it is now possible to implement fine grained access rights management which does not merely allow the network operator to request a password but rather to implement further access right management procedures even considering user behavior. In this case the user is the operator of the mobile device comprising the mobile identity module. Consequently, the method step as well as the respective communication exchange is performed between one or several mobile identity modules and hardware being operated by the network operator.

According to an aspect of the present invention the identity module is provided by means of an eUICC and the data request contains and eUICC-identification information EID. This provides the advantage that a commonly known standard can be reused and especially that the mobile identity module can be integrated in a mobile device for requesting telecommunication services. With the eUICC-identification information, EID for short, it is possible to uniquely identify the requesting mobile identity module, which provides the advantage that as history data requests are considered it is possible to identify specific attacks originating from the same mobile identity modules. Accordingly, the EID is applied as a security measure according to the suggested method.

According to a further aspect of the present invention the data request comprises demanding profile information and/ or network subscription information. This provides the advantage that the very specific domain of profile management and especially subscription management can be handled with the suggested contributions. As the present invention as specifically tailored towards profile information management and network subscription management it is possible to implement the suggested rights management in the telecommunication scenario thereby considering technical characteristics of the mobile end devices, the subscription management and the devices being operated by the service provider.

According to a further aspect of the present invention at least a selection of method steps is performed using a mobile telecommunication infrastructure. This provides the advantage that at least the step of receiving at least one data request is performed using a telecommunication network thereby fostering technical effects, which are of great advantage in subscription and network management. Applying a request evaluation metric as well as implementing and access right can be performed on the side of the network operator by means of a single device or by a distributed system. Consequently, it may be the case that applying a request evaluation metric and implementing an access right is performed on different hardware components, which are linked via a wired or wireless network. Consequently, a further security measure is introduced.

According to a further aspect of the present invention the request evaluation metric considers identity module characteristics, secret keys, public keys, a role of an identity module, an authentication information, a certificate, a timestamp, a security threat, information, a blacklist information, a whitelist information, content of the data request as such, a request frequency and/or data request characteristics. This provides the advantage that the network operator can grant access to specific data items not only as a function of provided data but can furthermore detect identity module characteristics such as data being provided by means of the eUICC. Along with commonly known authentication information a role can be considered such as an administrator. Furthermore, a certificate can be evaluated indicating under which restrictions access is to be granted. This may for instance comprise that timestamps for instance of previous data requests are evaluated as well. Furthermore, the data being provided by means of the data request as such can be evaluated and malicious software can be identified in the request. Furthermore, a blacklist may comprise mobile identity module information indicating which mobile identity in modules are to be blocked. The other way round a whitelist can be provided for identity modules, which are to be granted access. Furthermore, a specific request frequency can be evaluated regarding the number of occurrences of a data request within a specified period of time. Consequently, a wide range of security measures can be implemented.

According to a further aspect of the present invention the request evaluation metric considers at least one data request issued by a first identity module as a function of at least one data request issued by at least a second identity module. This provides the advantage that it is possible to identify a so-called Denial of Service attack based on the user behavior of further identity modules. In this way not only a single identity module can be observed and evaluated regarding its behavior but a joint attack can be identified.

According to a further aspect of the further invention access is denied in case a received specific data request corresponds with a previously satisfied data request. This provides the advantage that unusual downloads are detected and in case a user tries to download the same profile for several times such downloads can be restricted. Furthermore in this way replay attacks can be prevented. In a replay attack a so-called Man-in-the-Middle records data transmissions between mobile devices and the network operator and later on provides the recorded data for subscribing to the network. According to the presented aspect such replay attacks are no more possible as already satisfied data requests are not granted for a second time.

According to a further aspect of the present invention each data request is signed a timestamp to be considered by the request evaluation metric. This provides the advantage that each data request can be directly identified by means of a timestamp and accordingly a frequency of data requests can be evaluated.

According to a further aspect of the present invention the request evaluation metric applies counters for data requests and respective thresholds triggering the implementation of access rights and updating the present access rights. This provides the advantage that unsuccessful subscription attempts can be counted and upon reaching a maximum number of possible attempts the identity module can be blocked. The counter may be directed towards any item which is requested or any number of data requests. It may for instance be specified that a specific identity module has only three data requests to be handled within a certain period of time. In case additional data requests occur this identity module may be blocked. The counter may also address information items such that in a tree-like file hierarchy specific items to be downloaded are counted and after downloading a specific number of data items no further data items are provided. The implementation of counters may also address a combination of the examples as set forth above. One can for instance restrict the information items to be downloaded as a function of performed authorization request. In case authorization and subscription to the network fails, it may be the case that an unauthorized user tries to download profiles. Consequently, a combination of subscription attempts with downloaded profiles or at least profile data can be implemented.

According to a further aspect of the present invention implementing an access right comprises granting access to a specified data item, denying access for a specified data item, delaying access to a specified data item, delaying a further application of the request evaluation metric, blocking the identity module regarding further requests, manipulating a counter value and/ or an access right management operation. This provides the advantage that every access right management being possible can be implemented in the context of the subscription management or profile management. It may for instance be the case that upon downloading a specific data item further data requests are delayed such that a specific profile can for instance only be downloaded once a day. Furthermore, in case one login attempt fails, a specific time period has to be waited until a further attempt is possible. In any case a counter value may count the respective attempts or downloads. Consequently, the above provided aspects can be combined such that delaying is performed and furthermore a counter is increased.

According to a further aspect of the present invention the method steps are performed by a subscription manager data preparation unit. This provides the advantage that a well-recognized concept is introduced, which allows the implementation of method steps in the infrastructure of known concepts. Merely as an example the skilled person might apply the remote provisioning architecture for embedded UICC, technical specification, version 3.1, dated 27 May 2016 or any other version thereof.

According to a further aspect of the present invention the method steps are performed in accordance with a Remote SIM Provisioning RSP architecture for consumer devices procedure. This provides the advantage that a well-known architecture can be used for implementation of the present invention.

The problem is also solved by a distributed protocol for performing profile and subscription rights management regarding a mobile identity module, comprising message exchanges for triggering the following method steps, such as receiving at least one data request from the identity module over a wireless interface, applying a request evaluation metric on the received at least one data request considering present access rights and history data requests of the requesting identity module and implementing an access right for the at least one data request as a function of the applied request evaluation metric and updating the present access rights.

Consequently, the distributed protocol may trigger a message exchange between the mobile identity module being comprised in a mobile device and between the hardware being provided by the network operator or the service provider. Consequently, a mobile device communicates with a service provider resulting in the execution of the suggested method steps. The distributed protocol may be performed across several devices and its specification comprises messages, which are to be exchanged such that the suggested method steps can be performed.

The object is also solved by a system for performing profile and subscription rights management regarding a mobile identity module, comprising a profile issuing entity being arranged to receive at least one data request from the identity module over a wireless interface, an evaluation entity being arranged to apply a request evaluation metric on the received at least one data request considering present access rights and history data requests of the requested identity module and an access rights management entity being arranged to implement an access right for the at least one data request as a function of the applied request evaluation metric and updating the present access rights.

The object is also solved by a computer program product being arranged to perform the suggested method and to operate the suggested system.

The person skilled in the art appreciates that the suggested method provides method steps, which can be structurally implemented by the respective system. However, the system is able to perform the suggested method and perform at least in part the message exchange as being suggested by the respective protocol. Consequently, the aspects as being presented in the context of the method can likewise be implemented as features being part of the system for performing profile and subscription rights management.

In the following further aspects of the present invention are demonstrated in the context of the accompanying figures, which show:
- Fig. 1:: a flow chart diagram depicting a method for performing profile and subscription rights management according to an aspect of the present invention; and
- Fig. 2:: an application scenario involving a system for performing profile and subscription rights management according to an aspect of the present invention.

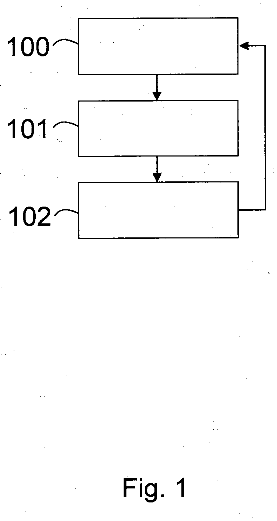

Fig. 1 shows a method for performing profile and subscription rights management regarding a mobile identity module, comprising the steps of receiving 100 at least one data request from the identity module over a wireless interface, applying 101 a request evaluation metric on the received at least one data request considering present access rights and history data requests of the requesting identity module and implementing 102 an access right for the at least one data request as a function of the applied request evaluation metric and updating the present access right. The skilled person appreciates that the above presented method steps can be performed iteratively and at least in part in a different order.

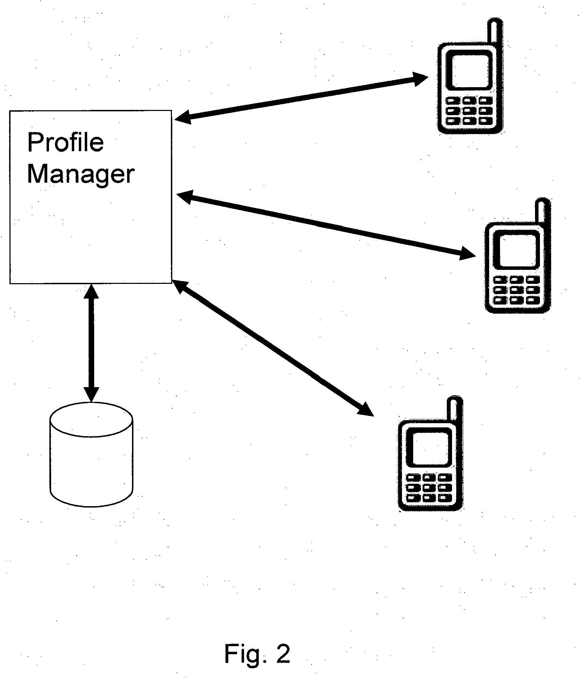

Fig. 2 shows an application scenario of the system for performing profile and subscription rights management. On the right hand side several end devices are indicated, each comprising a mobile identity module. As these end devices need to subscribe to a network they first connect to a profile issuing entity, which may be likewise named profile manager. Such a first connection is only implemented such that signalling data is to be transmitted. Hence, no connection is established being able to transfer payload. Once the right profile is downloaded for the offered services, such as data connections, the mobile end devices can establish a connection and use the offered services.

For doing so the profile manager, also referred to as profile issuing entity, is connected with a database providing a request evaluation metric comprising rules which allows the profile manager to receive the request evaluation metric and afterwards apply the request evaluation metric on the received at least one data request considering present access rights and history data requests of the requesting identity module. In the present Fig. 2 only three end devices are depicted, each holding a mobile entity module, for instance by means of a eUICC. As these end devices are potential attackers the profile manager may apply and thereby implement access rights to each of the end devices on the right hand side. The profile manager can be adapted to perform like a subscription manager data preparation unit.

The idea of the invention is to block Denial of Service attack against profiles hosted in the SMDP+. Also it shall prevent from brute force attacks using invalid client keys. To avoid excessive access by "untrusted" users the SMDP+ maintains an EID list of malicious EIDs. Whenever a download fails for an EID because of failed security checks it will be included in this list including a time stamp of the time where it has been included. For each EID a counter will be maintained. Each time this EID tries to access the system and runs into a failed security validation the counter is increased. A second time stamp may be included when the last failed try has been detected. When a certain threshold value has been reached any request will be blocked for the EID. All EIDs in this state will be blocked by default. This blocking can be temporary. This means if the EID did not try to access the system for a defined period of time the entry will be removed from the blacklist. Also it will be removed after timeout even if the threshold has not been reached.

Reasons for failed checks can be:
- any authentication failed
- no valid cert provided
- malicious payloads provided (e.g. inconsistent settings, invalid TLV structure like wrong length values)
- matching ID is assigned to different EID
- requesting non-released profiles.

## Claims

1. A method for performing profile and subscription rights management regarding a mobile identity module, comprising the steps:
- receiving (100) at least one data request from the identity module over a wireless interface;
- applying (101) a request evaluation metric on the received at least one data request considering present access rights and history data requests of the requesting identity module; and
- implementing (102) an access right for the at least one data request as a function of the applied request evaluation metric and updating the present access rights.

2. The method according to claim 1, **characterized in that** the identity module is provided by means of an eUICC and the data request contains an eUICC-identification information EID.

3. The method according to claim 1 or 2, **characterized in that** the data request comprises demanding profile information and/ or network subscription information.

4. The method according to any one of the preceding claims, **characterized in that** at least a selection of method steps is performed using a mobile telecommunication infrastructure.

5. The method according to any one of the preceding claims, **characterized in that** the request evaluation metric considers identity module characteristics, secret keys, public keys, a role of an identity module, an authentication information, a certificate, a time stamp, a security threat information, a blacklist information, a whitelist information, content of the data request as such, a request frequency and/ or data request characteristics.

6. The method according to any one of the preceding claims, **characterized in that** the request evaluation metric considers at least one data request issued by a first identity module as a function of at least one data request issued by at least a second identity module.

7. The method according to any one of the preceding claims, **characterized in that** access is denied in case a received specific data request corresponds with a previously satisfied data request.

8. The method according to any one of the preceding claims, **characterized in that** each data request is assigned a time stamp to be considered by the request evaluation metric.

9. The method according to any one of the preceding claims, **characterized in that** the request evaluation metric applies counters for data requests and respective thresholds triggering the implementation of access rights and updating the present access rights.

10. The method according to any one of the preceding claims, **characterized in that** implementing an access right comprises granting access to a specified data item, denying access for a specified data item, delaying access to a specified data item, delaying a further application of the request evaluation metric, blocking the identity module regarding further requests, manipulating a counter value and/ or an access right management operation.

11. The method according to any one of the preceding claims, **characterized in that** the method steps are performed by a Subscription Manager Data Preparation unit SM-DP.

12. The method according to any one of the preceding claims, **characterized in that** the method steps are performed in accordance with a Remote Sim Provisioning RSP Architecture for consumer Devices procedure.

13. A distributed protocol for performing profile and subscription rights management regarding a mobile identity module, comprising message exchanges for triggering the following method steps:
- receiving (100) at least one data request from the identity module over a wireless interface;
- applying (101) a request evaluation metric on the received at least one data request considering present access rights and history data requests of the requesting identity module; and
- implementing (102) an access right for the at least one data request as a function of the applied request evaluation metric and updating the present access rights.

14. A system for performing profile and subscription rights management regarding a mobile identity module, comprising:
- a profile issuing entity being arranged to receive (100) at least one data request from the identity module over a wireless interface;
- an evaluation entity being arranged to apply (101) a request evaluation metric on the received at least one data request considering present access rights and history data requests of the requesting identity module; and
- an access rights management entity being arranged to implement (102) an access right for the at least one data request as a function of the applied request evaluation metric and updating the present access rights.

15. A computer program product being arranged to perform a method in accordance with any one of the preceding claims 1 to 12.

## Amended claims

### Amended claims in accordance with Rule 137(2) EPC.

1. A method for performing profile and subscription rights management regarding a mobile identity module, comprising the steps:
- receiving (100) at least one data request from the identity module over a wireless interface;
- applying (101) a request evaluation metric on the received at least one data request considering present access rights and history data requests of the requesting identity module; and
- implementing (102) an access right for the at least one data request as a function of the applied request evaluation metric and updating the present access rights,
**characterized in that** the identity module is provided by means of an eUICC and the data request contains an eUICC-identification information EID.

2. The method according to claim 1, **characterized in that** the data request comprises demanding profile information and/ or network subscription information.

3. The method according to claim 1 or 2, **characterized in that** at least a selection of method steps is performed using a mobile telecommunication infrastructure.

4. The method according to any one of the preceding claims, **characterized in that** the request evaluation metric considers identity module characteristics, secret keys, public keys, a role of an identity module, an authentication information, a certificate, a time stamp, a security threat information, a blacklist information, a whitelist information, content of the data request as such, a request frequency and/ or data request characteristics.

5. The method according to any one of the preceding claims, **characterized in that** the request evaluation metric considers at least one data request issued by a first identity module as a function of at least one data request issued by at least a second identity module.

6. The method according to any one of the preceding claims, **characterized in that** access is denied in case a received specific data request corresponds with a previously satisfied data request.

7. The method according to any one of the preceding claims, **characterized in that** each data request is assigned a time stamp to be considered by the request evaluation metric.

8. The method according to any one of the preceding claims, **characterized in that** the request evaluation metric applies counters for data requests and respective thresholds triggering the implementation of access rights and updating the present access rights.

9. The method according to any one of the preceding claims, **characterized in that** implementing an access right comprises granting access to a specified data item, denying access for a specified data item, delaying access to a specified data item, delaying a further application of the request evaluation metric, blocking the identity module regarding further requests, manipulating a counter value and/ or an access right management operation.

10. The method according to any one of the preceding claims, **characterized in that** the method steps are performed by a Subscription Manager Data Preparation unit SM-DP.

11. The method according to any one of the preceding claims, **characterized in that** the method steps are performed in accordance with a Remote Sim Provisioning RSP Architecture for consumer Devices procedure.

12. A system for performing profile and subscription rights management regarding a mobile identity module, comprising:
- a profile issuing entity being arranged to receive (100) at least one data request from the identity module over a wireless interface;
- an evaluation entity being arranged to apply (101) a request evaluation metric on the received at least one data request considering present access rights and history data requests of the requesting identity module; and
- an access rights management entity being arranged to implement (102) an access right for the at least one data request as a function of the applied request evaluation metric and updating the present access rights,
**characterized in that** the identity module is provided by means of an eUICC and the data request contains an eUICC-identification information EID.

13. A computer program product being arranged to perform a method in accordance with any one of the preceding claims 1 to 11.
